# EUROPEAN PATENT APPLICATION

(11) **EP 1 524 207 A1**
(43) Date of publication of application: **20.04.2005**
(21) Application number: 04256181.1
(22) Date of filing: 06.10.2004
(51) Int. Cl.: B65D 85/68

(54) **Packaging for miter saw**

(30) Priority: 14.10.2003 US 511043 P
(71) Applicant: Delta International Machinery Corp., Jackson, TN 38305 (US)
(72) Inventor: Powers, David M., Troy, Ohio 45373 (US); Smith, John C., Denver, North Carolina 28037 (US)
(74) Representative: Johnstone, Helen Margaret

(57) **Abstract**

A compact container assembly for shipping and storing a miter saw capable of being separated into a base portion and a saw portion and thereafter reassembled by a user and a method for packaging such a miter saw for shipping or storage.

## Description

### CROSS-REFERENCE TO RELATED APPLICATIONS

The present application claims priority under 35 U.S.C. § 119(e) to United States Provisional Application Number 60/511,043 entitled: *Packaging for Miter Saw* filed October 14, 2003, which is hereby incorporated by reference in its entirety.

### FIELD OF THE INVENTION

The present invention relates to the field of packaging utilized for shipping and storing miter saws, and more particularly, to a compact container assembly for shipping and/or storing miter saws capable of being separated into a base portion and a saw portion and a method for packaging such miter saws for shipping or storage.

### BACKGROUND OF THE INVENTION

Miter saws have traditionally been packaged and shipped fully assembled or substantially assembled, requiring the attachment only minor components. This method of packaging allows the miter saws to be used almost immediately, without substantial assembly, when removed from the shipping container. Moreover, miter saws, particularly compound miter saws, typically employ complex pivoting/beveling assemblies coupling the saw or cutting head portion of the miter saw to the base portion making assembly of the saw portion to the base portion exceptionally difficult for an untrained user. However, because miter saws are shipped assembled or substantially assembled, the cartons or containers in which they are shipped must have relatively large volumes so that the miter saws, which are somewhat bulky, can be totally enclosed in the carton or container along with sufficient packing material to prevent damage to the miter saw from rough handling.

United States Patent 5,235,889 to Brickner et al. ('889) discloses a compound miter saw including a beveling system that comprises a male conical taper structure having an outer surface defining a cone-shaped member coupled to a saw portion support mounted to the base portion of the miter saw. A female conical taper structure defining a cavity having a conically-shaped inner wall having a configuration substantially matching the outer surface of the cone-shaped member is coupled to the saw portion (cuttinghead system). A biasing mechanism allows a user to adjustably bias the conically-shaped inner wall of the female conical taper structure onto the outer surface of the cone-shaped member system permitting the user to selectively loosen the bias in order to enable the conically-shaped inner wall to rotate on the outer surface of the cone-shaped member, and therefore, enable the user to adjust the bevel of the saw portion (cuttinghead system). The biasing mechanism further permits the user to selectively tighten the bias so that the user can lock the bevel of the saw portion (cuttinghead system) in a preferred position.

One heretofore unrecognized advantage of the beveling assembly of the compound miter saw disclosed in the '889 patent is that the male/female conical taper structure allows the saw portion to be quickly and easily separated from and assembled to the base portion of the miter saw without the use of tools. Consequently, it would be desirable to provide compact container assembly for shipping and storing the compound miter saw disclosed in the '889 patent, or, likewise, any miter saw which is capable of being separated into a base portion and a saw portion and thereafter reassembled by a user, wherein the saw portion is separated from the base portion while the miter saw is held within the packaging container and assembled together after removal from the container. It would also be desirable to provide a method for packaging such miter saws for shipping or storage.

### SUMMARY OF THE INVENTION

Accordingly, the present invention is directed to a compact container assembly for shipping and storing a miter saw, such as the compound miter saw disclosed in the '889 patent, or the like, that is capable of being separated into a base portion and a saw portion and thereafter reassembled by a user and a method for packaging such a miter saw for shipping or storage.

In one specific embodiment, a container assembly is provided for holding a miter saw having a base portion and a saw portion pivotally joined to the base portion. The container assembly comprises a container and packaging disposed in the container for holding the miter saw within the container when the miter saw is disassembled so that the saw portion is separated from the base portion. Preferably, the container has a minimum volume less than the volume required to hold the miter saw were the saw packaged in an assembled configuration such that the saw portion is assembled to the base portion.

In another specific embodiment, a method is provided for packaging a miter saw having a base portion and a saw portion joined to the base portion, wherein the miter saw occupies a first minimum volume when packaged in an assembled configuration. In this exemplary embodiment, the method comprises the steps of separating the saw portion from the base portion and packaging the saw portion and the base portion in a disassembled configuration. When packaged, the saw portion is oriented with respect to the base portion so that the saw portion and the base portion occupy a second minimum volume when packaged together, the second minimum volume being less than the first minimum volume.

In yet another specific embodiment, a method is provided for packaging a miter saw having a base portion and a saw portion pivotally joined to the base portion. In this exemplary embodiment the method includes the steps of disassembling the miter saw so that the saw portion is separated from the base portion and packaging the saw portion and the base portion into a container. When packaged, the saw portion is oriented with respect to the base portion within the container so that the container has a minimum volume, the minimum volume being less than the volume of a container sized to hold the miter saw when the miter saw is assembled.

It is to be understood that both the foregoing general description and the following detailed description are exemplary and explanatory only and are not necessarily restrictive of the invention claimed. The accompanying drawings, which are incorporated in and constitute a part of the specification, illustrate embodiments of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is an isometric view illustrating a compound miter saw, specifically the compound miter saw disclosed in the '889 patent, which is capable of being separated into a base portion and a saw portion and thereafter reassembled by a user in accordance with the present invention;
FIG. 2 is an exploded isometric view of the compound miter saw shown in FIG. 1, wherein the saw portion is separated from the base portion;
FIGS. 3, 4, 5, and 6 are isometric, elevation, and plan views of the compound miter saw shown in FIGS. 1 and 2, further illustrating how the saw portion may be oriented with respect to the base portion so that the miter saw may be placed in a container having a minimum volume less than the volume of a container sized to hold the miter saw when the miter saw is assembled as shown in FIG. 1;
FIG. 7 is an isometric view illustrating a container assembly for holding the miter saw shown in FIGS. 3, 5, and 6 in accordance with an exemplary embodiment of the present invention;
FIGS. 8 and 9 are partial exploded isometric views of the container assembly shown in FIG. 7, wherein components of the compound miter saw are inserted into the container assembly;
FIGS. 10 and 11 are plan views illustrating packaging of the container assembly shown in FIGS. 8 and 9;
FIG. 12 is a partial isometric view of the container assembly including the compound miter saw and packaging material; and
FIGS. 13, 14, 15, and 16 are diagrammatic isometric views comparing the loading of a pallet with container assemblies as shown in FIGS. 7 through 12 versus the loading of a pallet with container assemblies sized to hold assembled compound miter saws shown in FIG. 1.

### DETAILED DESCRIPTION OF THE INVENTION

Reference will now be made in detail to the presently preferred embodiments of the invention, examples of which are illustrated in the accompanying drawings.

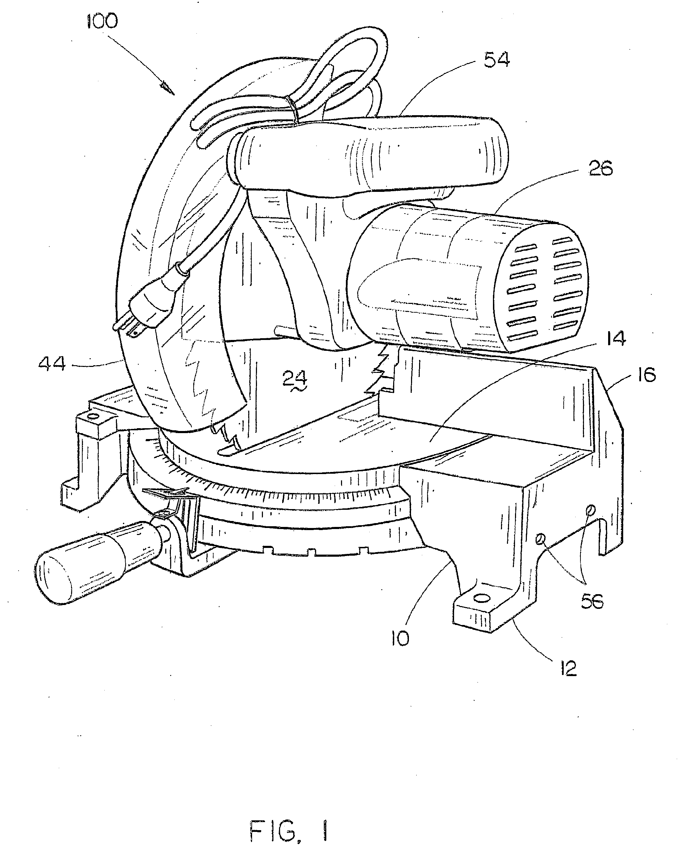

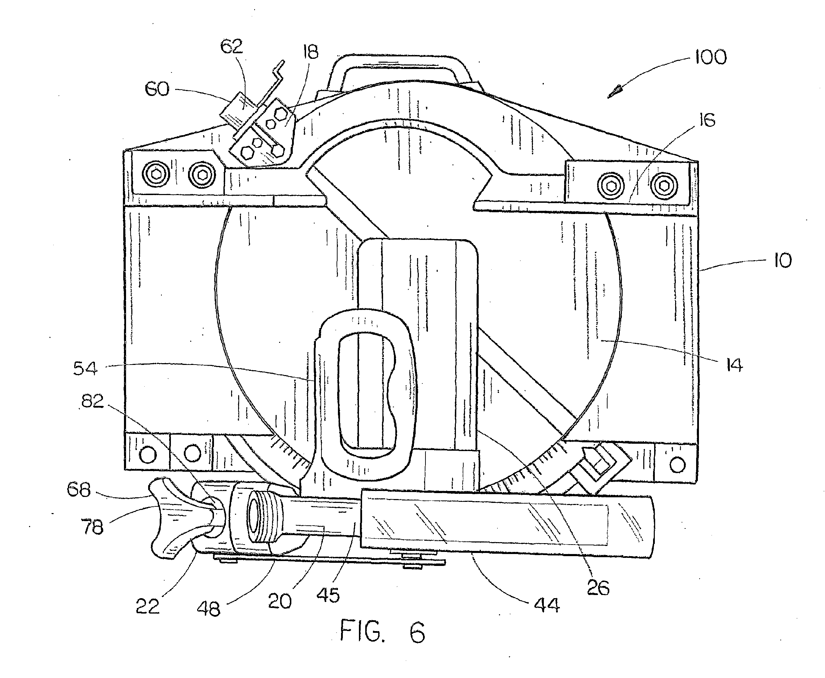

The present invention provides a compact container assembly and a method for packaging a miter saw that is capable of being separated into a base portion and a saw portion and thereafter reassembled by a user and a method for packaging such a miter saw for shipping or storage. Referring generally to FIGS. 1 through 6, an exemplary compound miter saw 100, in accordance with the present invention is described. In the embodiment illustrated, the compound miter saw 100 comprises the compound miter saw disclosed in United States Patent 5,235,889 to Brickner et al., and manufactured by the Delta International Machinery Corporation as the MS250 compound miter saw. United States Patent 5,235,889 is herein incorporated by reference in its entirety.

In the exemplary embodiment shown in FIGS 1 though 6, the compound miter saw 100 includes a base 10 having a lower surface 12 for supporting the base on a work surface. A turntable 14 is rotatably supported by base 10. A fence 16 is disposed above base 10 for supporting the orientation of a workpiece located on the base. A support 18 is coupled to turntable 14 at a rear portion of the turntable.

The compound miter saw 100 further comprises a cuttinghead system for cutting the workpiece. The cuttinghead system comprises an arm 20 coupled to support 18 by a pivoting system 22 which pivots about a bolt for positioning a motor driven saw 24 between a raised, rest position and a lowered, operational position. In the embodiment illustrated, a motor 26 drives saw 24 through an arbor directly coupled to motor 26. Saw 24 is energized by depressing a switch trigger (not shown), which is electrically coupled to motor 26.

Saw 24 is protected by both a fixed-position upper blade guard 45 and a movable lower blade guard 44. When a cut is made in the workpiece, lower blade guard 44 automatically moves upward in order to expose blade 24 to the workpiece. Lower blade guard 44 rotates about a pivot located on upper blade guard 45. In the embodiment shown, lower blade guard 44 is activated by linkage bar 48 which is coupled between pivoting system 22 and a pivot point eccentrically located on lower blade guard 44. A cuttinghead handle 54 is coupled to the cuttinghead system for guiding movement of saw 24 between the raised, rest position and the lowered, operational position.

In the embodiment illustrated in FIGS. 1 though 6, the compound miter saw 100 may further comprise table extensions (not shown), which may be formed of shaped rod stock and fitted into apertures 56 defined in the ends of base 10. An adjustable workpiece stop (not shown) and an accessory vise clamp (not shown) may be positioned on either side of blade 24 in apertures defined by base 10. A dust bag (not shown) may also be coupled to a sawdust output portion of upper blade guard 45.

In accordance with the present invention, the compound miter saw disclosed includes a beveling system for positioning the cuttinghead system so that it can be selectively positioned for cutting the workpiece not only perpendicular to table 14 but also with a bevel of up to at least approximately 45 degrees from perpendicular. In the embodiment illustrated, the beveling system comprises a male conical taper structure 60 comprising an outer surface 62 defining a cone-shaped member, the cone-shaped member being coupled to support 18. A female conical taper structure 64 defines a cavity having a conically-shaped inner wall 66 with a configuration substantially matching the outer conical surface shape 62 of cone-shaped member 60. Female conical taper structure 64 is coupled to the cuttinghead system via a pivoting system 22, which may comprise any suitable pivoting system familiar to those skilled in the art.

The present beveling system includes a biasing system 68 for permitting a user to adjustably bias the conically-shaped inner wall 66 of female conical taper structure 64 onto outer conical surface 62 of cone-shaped member 60. Biasing system 68 comprises a system for loosening the bias in order to permit conically-shaped inner wall 66 to rotate on the outer conical surface 62 of cone-shaped member 60 and, therefore, permit the user to adjust the bevel of the cuttinghead system. Biasing system 68 further comprises a system for selectively tightening the bias so that the user can lock the bevel of the cuttinghead system in a preferred position.

The cuttinghead system and the support each preferably comprise a stop system having a stop structure for stopping the beveling movement of the cuttinghead system at both a first position in which saw 24 is positioned substantially perpendicular to table 14 and a second position in which saw 24 is positioned at substantially 45 degrees to table 14. These stop systems preferably comprise an adjustment system for adjusting the first and second positions so that saw 24 can be precisely set to the respective perpendicular or 45 degree positions. In the embodiment shown, these stop structures protrude from pivoting system 22 of the cuttinghead system and from support 18 and are positioned in alignment so that they contact one another as the cuttinghead system is pivoted. For example, in a preferred embodiment, pivoting system 22 of the cuttinghead system comprises a single stop structure, and support 18 comprises two stop structures. The two stop structures of support 18 define threaded apertures through which threaded stops are adjustably positioned.

In the embodiment shown, biasing system 68 comprises a threaded handle 78 which forces female conical taper structure 64 toward male conical taper structure 60 in order to increase the bias between the outer conical surface 62 of the cone-shaped member 60 and the conically-shaped inner wall 66 of the female conical taper structure 64. Preferably, handle 78 of biasing system 68 comprises a flange (not shown) which presses against a rear surface 82 of female conical taper structure 64. Handle 78 comprises a shaft having a threaded portion 84 matching the thread of a threaded aperture 80 defined by cone-shaped member 60. The shaft having the threaded portion 84 passes through an aperture (not shown) in the rear portion of female conical taper structure 64. The shaft having the threaded portion 84 comprises an enlarged diameter portion (not shown) having a diameter larger than the aperture in the rear portion of female conical taper structure 64. The enlarged diameter shaft portion fits within female conical structure 64 and has a surface which bears against a rear inner wall of female conical structure 64. A stop and handle 78 are assembled to the shaft having the threaded portion 84 after the shaft is positioned through the aperture in the rear portion of female conical taper structure 64. When handle 78 is turned in a direction to loosen biasing system 68, the enlarged diameter shaft portion pushes against the rear inner wall of female conical taper structure 64 and forces the conically-shaped inner wall of female conical taper structure 64 to pull slightly away from outer conical surface 66 of cone-shaped member 60. This enables the conically-shaped inner wall 66 of female conical taper structure 64 to smoothly rotate over the outer conical surface 62 of cone-shaped member 60. On the other hand, when handle 78 is turned in a direction to tighten biasing system 68, conically-shaped inner wall 66 of female conical structure 64 is biased onto outer conical surface 62 of cone-shaped member 60, a process which securely locks the cuttinghead system into a position selected by the user.

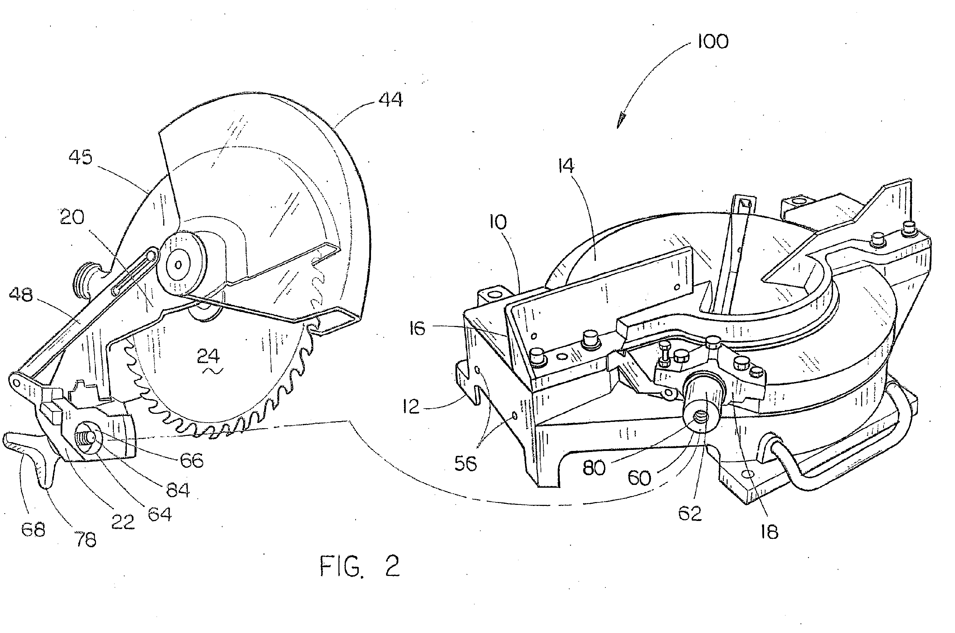

Referring now to FIG. 2, the exemplary compound miter saw 100 is capable of being separated into a base portion and a saw portion and thereafter reassembled by a user in accordance with the present invention. In the embodiment described in FIGS. 1 through 6, the base portion includes the base 10, the turntable 14, the fence 16, and the support 18. The saw portion includes the arm 20, the pivoting system 22, the motor driven saw 24, the motor 26, and the cuttinghead handle 54. By turning the threaded handle 78 in a direction to loosen biasing system 68 (as described above), the enlarged diameter shaft portion pushes against the rear inner wall of female conical taper structure 64 and forces the pivoting system 22 to pull away from the support 18. This enables the saw portion including the pivoting system 22 to be separated from the base portion including the support 18.

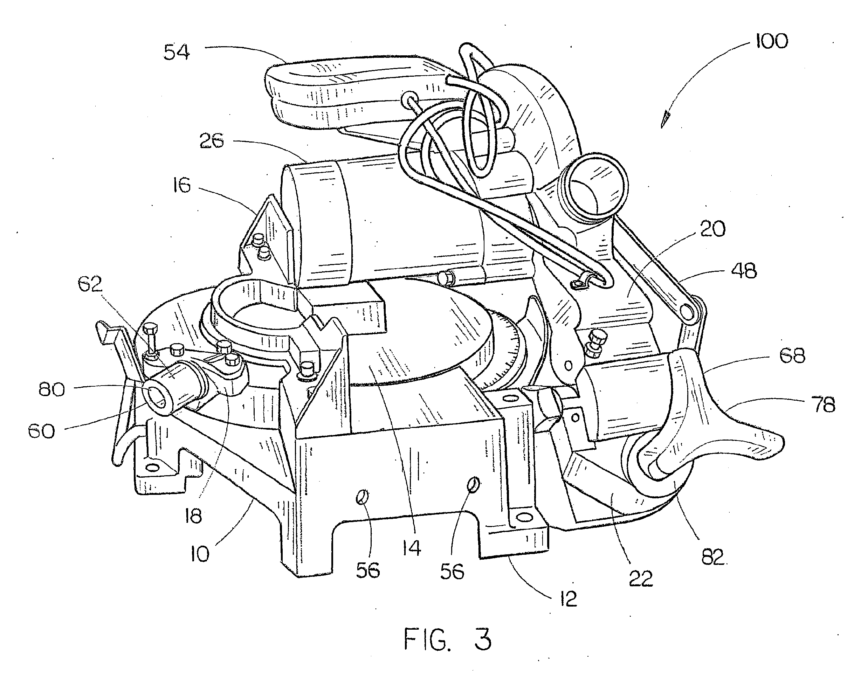

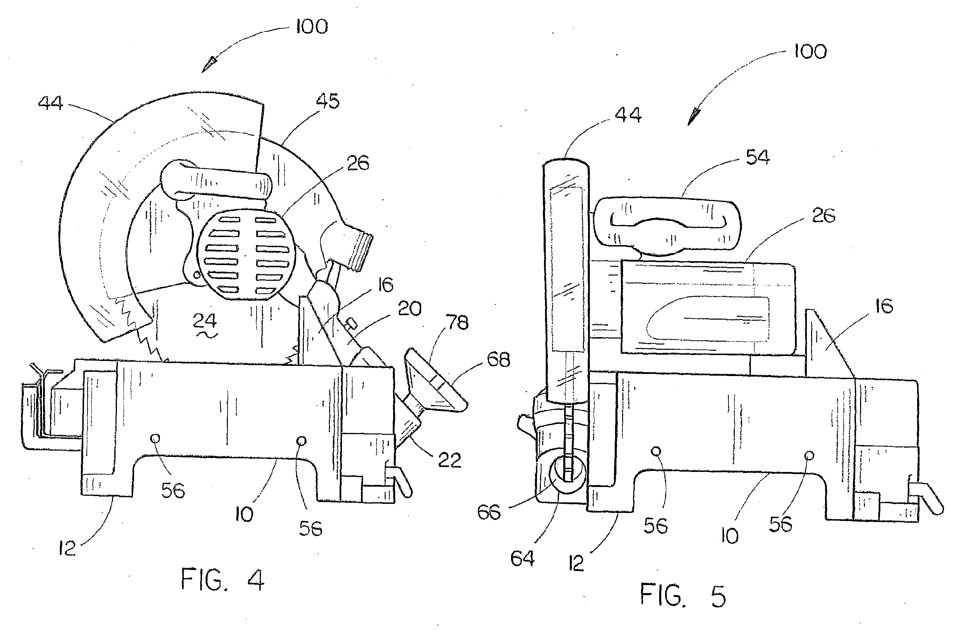

As shown in FIGS. 3 through 6, the saw portion of the compound miter saw 100 may be oriented with respect to the base portion so that the miter saw may be placed in a container having a minimum volume less than the volume of a container sized to hold the miter saw when the miter saw is assembled as shown in FIG. 1. For example, as shown in FIGS. 3, 5, and 6, the motor 26 of the saw portion may be placed adjacent to the fence 16 and the turntable 14 of the base portion, while the arm 20 of the saw portion may be placed adjacent to the base 10 of the base portion. By arranging the components of the compound miter saw 100 in this manner, a first minimum volume occupied by the saw components in an assembled configuration, as seen in FIG. 4, may be reduced to a second minimum volume less than the first in a disassembled configuration, as seen in FIG. 5. It should be noted that other components may be disassembled from the saw portion and the base portion of the compound miter saw 100 without departing from the scope and intent of the present invention. For instance, accessories for the saw such as table extensions, adjustable workpiece stops, accessory vise clamps, dust bags, and the like may be disassembled from either of the saw portion and the base portion and placed with the saw portion and the base portion in a container. The removal and repositioning of such accessories may allow for a further reduction from the first minimum volume to the second minimum volume.

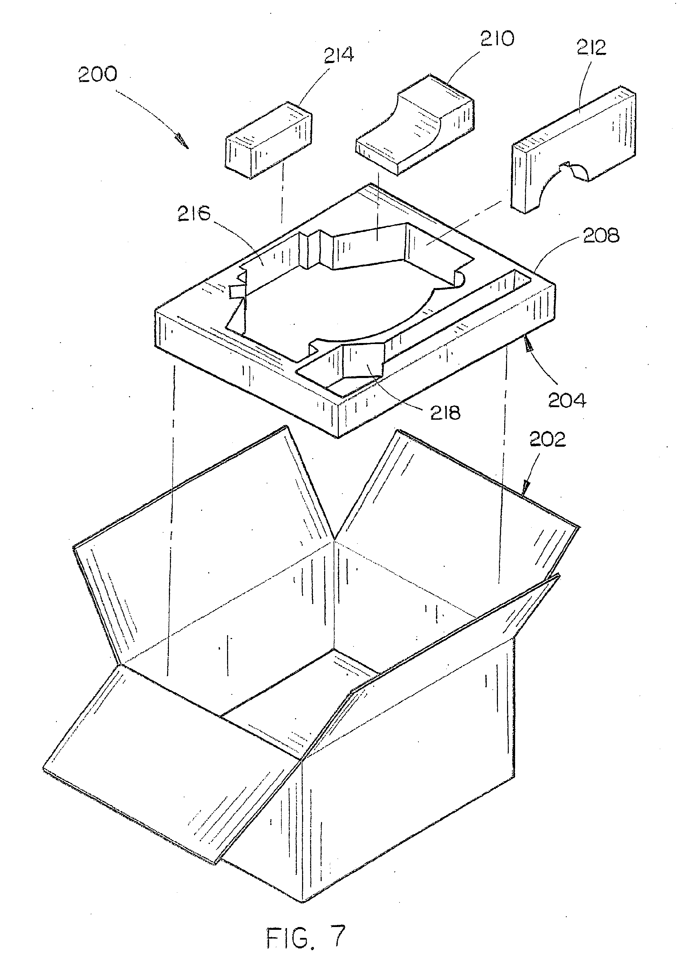

Referring now to FIGS. 7 through 12, an exemplary container assembly 200 in accordance with the present invention is described. The container assembly 200 is capable of holding a miter saw, such as the compound miter saw 100 described in the discussion of FIGS. 1 through 6, having a base portion 102 and a saw portion 104 pivotally joined to the base portion 102. The container assembly 200 comprises a container 202 and packaging 204 disposed in the container 202 for holding the miter saw 100 within the container 202 when the miter saw 100 is disassembled so that the saw portion 102 is separated from the base portion 104. The container 202 has a second minimum volume less than a first minimum volume required to hold the miter saw 100 were the saw packaged in an assembled configuration such that the saw portion 102 was assembled to the base portion 104.

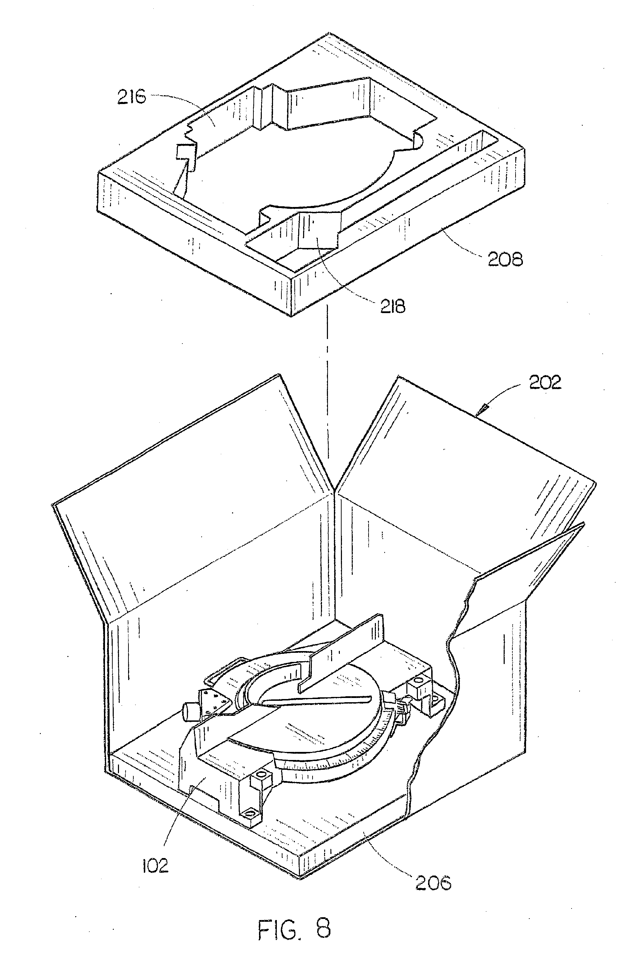

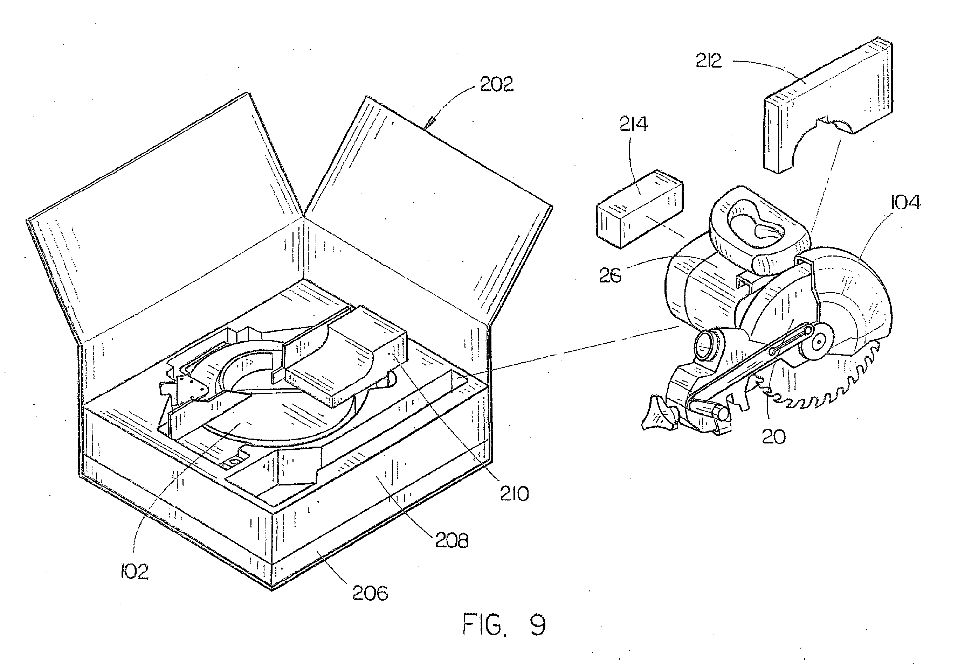

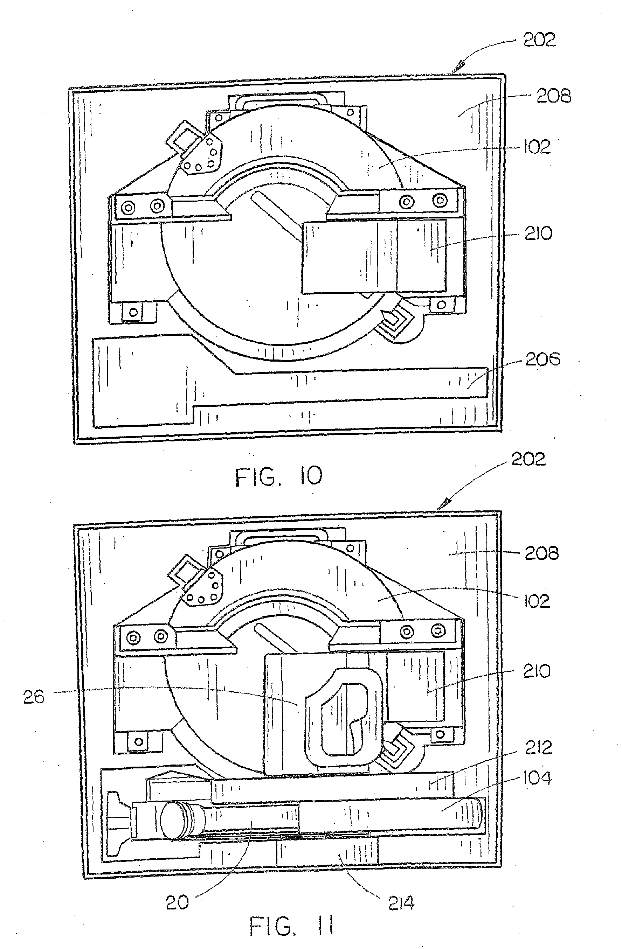

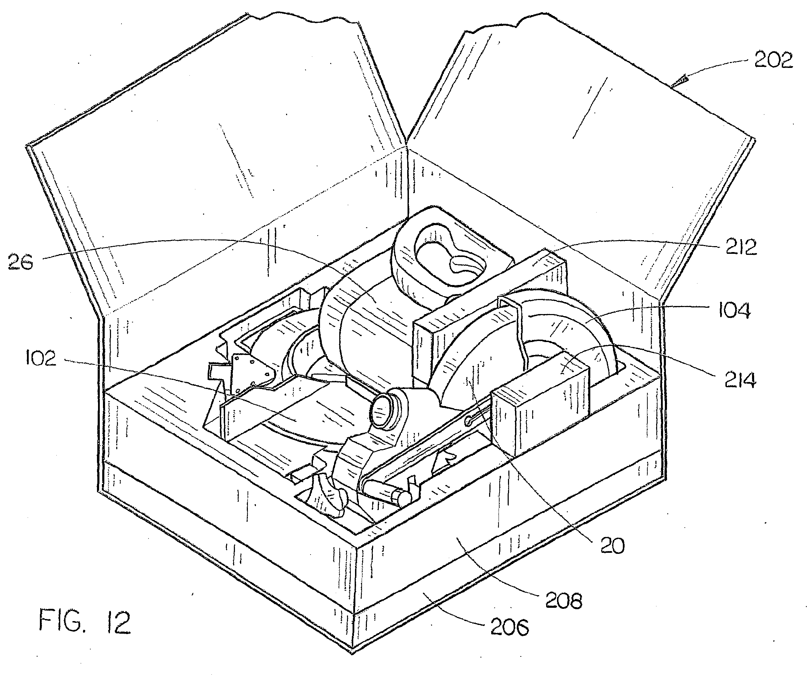

Container 202 includes packaging 204 in accordance with an exemplary embodiment of the present invention. Packaging 204 includes packing pieces 206, 208, 210, 212, and 214. Packing pieces 206, 208, 210, 212, and 214 may be formed from foam material, molded pulp, corrugated material, honeycomb material, or the like for cushioning, protecting, and supporting compound miter saw 100 during shipping, storage, or the like. For example, exemplary packing piece 208 is formed with cut-out section 216 in a shape of base portion 102 and cut-out section 218 in a shape of arm portion 104. Packing piece 208 including cut-out sections 216 and 218 serves to cushion, protect, and support base portion 102 and arm portion 104 in combination with packing pieces 206, 210, 212, and 214. For instance, base portion 102 of compound miter saw 100 is inserted into container 202 and placed on top of packing piece 206. Then, packing piece 208 is placed around base portion 102 by fitting base portion 102 into cut-out section 216, as shown in FIG. 8. Next, packing piece 210 is placed on base portion 102, as shown in FIG. 10. Then, arm portion 104 is placed into cut-out section 218 of packing piece 208, being supported on packing piece 206, while the motor 26 of arm portion 104 is supported on packing piece 210, as shown in FIG. 9. Packing piece 212 is placed between arm 20 and motor 26, and packing piece 214 is placed between arm 20 and a side of container 202, as shown in FIG. 11. When all of the various packing pieces 206, 208, 210, 212, and 214 and the components 102 and 104 of compound miter saw 100 have been assembled, as shown in FIG. 12, container 202 may be closed, sealed, and will then be ready for shipping, storage or the like.

Those of ordinary skill in the art will appreciate that many various methods and techniques may be used for packaging the components of miter saw 100. For example, foam pellets may be inserted into container 202. Alternately, air-filled plastic bags or the like may be inserted into container 202. It should also be noted that plastic wrapping material having air-filled pockets or the like for cushioning may be wrapped around the components of the compound miter saw 100 prior to packaging in container 202. It is further contemplated that container 202 may include many different materials, including cardboard, wood, particleboard, wooden slats, lath, and the like without departing from the scope and intent of the present invention.

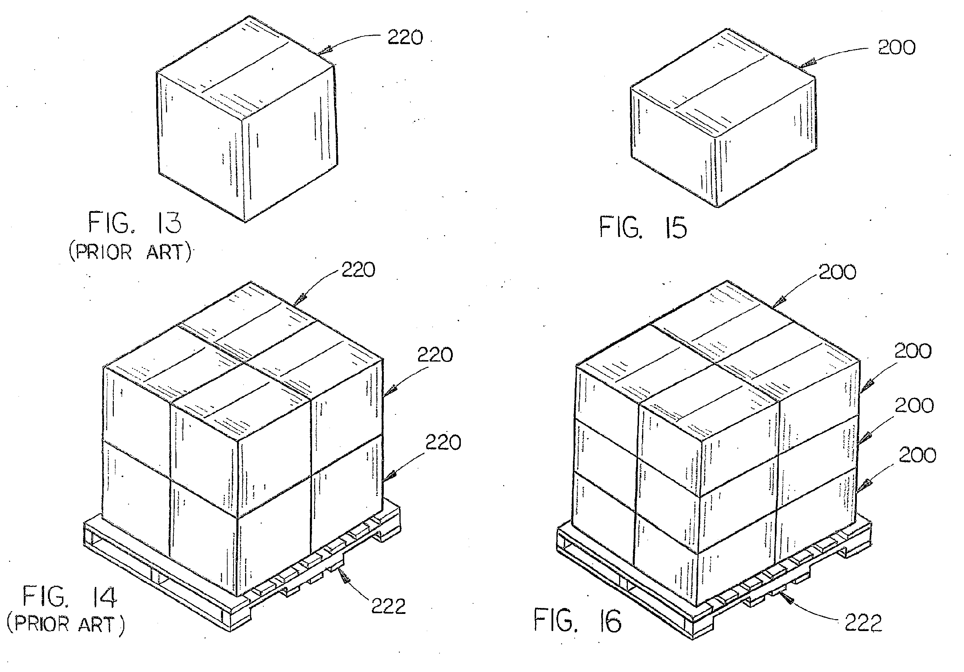

Referring to FIGS. 13 through 16, packaging the disassembled components of the compound miter saw enables the use of a container assembly 200 having a second minimum volume. This second minimum container volume is less than a first minimum container volume for a container assembly 220 holding a fully assembled compound miter saw. Those of ordinary skill in the art will appreciate that this savings in container volume may allow for the shipping and transportation of more container assemblies 200 at one time, resulting in substantial cost savings, increased efficiency of storage, and the like. For instance, the number of container assemblies 220 stackable upon a shipping pallet 222 may be eight, as seen in FIG. 14. The number of container assemblies 200 in accordance with the present invention stackable upon the same shipping pallet 222 may be as many as 12, as seen in FIG. 16. In another instance, the number of container assemblies 220 loadable into a 48 foot long semi-tractor trailer may be 448, while the number of container assemblies 200 in accordance with the present invention loadable into the same 48 foot long semi-tractor trailer may be as many as 672. Additionally, the number of container assemblies 220 transportable in a shipping container may be 560, while the number of container assemblies 200 in accordance with the present invention transportable in the same shipping container may be as many as 749. Those of ordinary skill in the art will appreciate that the benefits of a smaller container assembly 200 extend beyond shipping and storage, however. For example, a smaller sized container assembly 200 in accordance with the present invention will take up less floor space in a retail environment. It is further contemplated that a smaller sized container assembly 200 in accordance with the present invention will be easier to carry and load into a purchaser's vehicle, such as a compact car with limited trunk space.

The compound miter saw 100 illustrated and described herein is exemplary of the compound miter saws described in United States Patent 5,235,889 to Brickner et al. Nevertheless it will be appreciated by those of ordinary skill in the art that the present invention is not limited to any specific miter saw, but is instead contemplated to be applicable to any miter saw wherein at least the saw portion of the miter saw is separable from the base portion of the miter saw, and thereafter capable of reattachment to the base portion by a user, technician, or the like. Those skilled in the art will further recognize that many alternate configurations of miter saws including miter saws having an alternative base 10, turntable 14, motor drive arrangement, guard arrangement, linkage arrangement, different overall dimensions, or the like are possible and that the configuration shown in the drawings and described herein is set forth by way of example only.

It is believed that the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A method for packaging a miter saw having a base portion and a saw portion joined to the base portion, the miter saw occupying a first minimum volume when packaged in an assembled configuration, the method comprising:
separating the saw portion from the base portion; and
packaging the saw portion and the base portion in a disassembled configuration,
wherein the saw portion is oriented with respect to the base portion so that the saw portion and the base portion occupy a second minimum volume when packaged together, the second minimum volume being less than the first minimum volume.

2. The method as claimed in claim 1, wherein the step of separating the saw portion from the base portion comprises detaching the saw portion from the base portion at a beveling assembly, the beveling assembly joining the saw portion and the base portion for beveling the saw portion with respect to the base portion

3. The method as claimed in claim 2, wherein the beveling assembly comprises a first bevel member coupled to the saw portion and a second bevel member mounted to the base portion, the first bevel member being separable from the second bevel member.

4. The method as claimed in claim 3, wherein the first bevel member comprises a female conical taper structure defining a cavity having a conically-shaped inner wall, the conically-shaped inner wall having a configuration substantially matching the outer conical surface shape of the cone-shaped member, the female conical taper structure being coupled to the

5. The method as claimed in claim 1, wherein the saw portion has a generally vertical orientation with respect to the base portion when assembled to the base portion, and wherein the saw portion is held adjacent to the base portion in a generally horizontal orientation with respect to the base portion when packaged.

6. The method as claimed in claim 1, wherein the packaging material comprises foam.

7. The method as claimed in claim 1, wherein the packaging material comprises cardboard.

8. The method as claimed in claim 1, wherein the packaging material comprises formed pulp.

9. A method for packaging a miter saw having a base portion and a saw portion pivotally joined to the base portion, the method comprising:
disassembling the miter saw so that the saw portion is separated from the base portion; and
packaging the saw portion and the base portion into a container,
wherein the saw portion is oriented with respect to the base portion within the container so that the container has a minimum volume, the minimum volume being less than the volume of a container sized to hold the miter saw when the miter saw is assembled.

10. The method as claimed in claim 9, wherein the step of disassembling the saw portion from the base portion comprises detaching the saw portion from the base portion at a beveling assembly, the beveling assembly joining the saw portion and the base portion for beveling the saw portion with respect to the base portion

11. The method as claimed in claim 10, wherein the beveling assembly comprises a first bevel member coupled to the saw portion and a second bevel member mounted to the base portion, the first bevel member being separable from the second bevel member.

12. The method as claimed in claim 11, wherein the first bevel member comprises a female conical taper structure defining a cavity having a conically-shaped inner wall, the conically-shaped inner wall having a configuration substantially matching the outer conical surface shape of the cone-shaped member, the female conical taper structure being coupled to the

13. The method as claimed in claim 9, wherein the saw portion has a generally vertical orientation with respect to the base portion when assembled to the base portion, and wherein the saw portion is held adjacent to the base portion in a generally horizontal orientation with respect to the base portion when packaged.

14. The method as claimed in claim 9, wherein the packaging material comprises foam.

15. The method as claimed in claim 9, wherein the packaging material comprises cardboard.

16. The method as claimed in claim 9, wherein the packaging material comprises formed pulp.

17. A container assembly for holding a miter saw having a base portion and a saw portion pivotally joined to the base portion, comprising:
a container; and
packaging disposed in the container for holding the miter saw within the container when the miter saw is disassembled so that the saw portion is separated from the base portion;
wherein the container has a minimum volume less than the volume required to hold the miter saw were the saw packaged in an assembled configuration such that the saw portion is assembled to the base portion.

18. The container assembly as claimed in claim 17, the saw portion is separated from the base portion by detaching the saw portion from the base portion at a beveling assembly, the beveling assembly joining the saw portion and the base portion for beveling the saw portion with respect to the base portion

19. The container assembly as claimed in claim 18, wherein the beveling assembly comprises a first bevel member coupled to the saw portion and a second bevel member mounted to the base portion, the first bevel member being separable from the second bevel member.

20. The container assembly as claimed in claim 19, wherein the first bevel member comprises a female conical taper structure defining a cavity having a conically-shaped inner wall, the conically-shaped inner wall having a configuration substantially matching the outer conical surface shape of the cone-shaped member, the female conical taper structure being coupled to the

21. The container assembly as claimed in claim 17, wherein the saw portion has a generally vertical orientation with respect to the base portion when assembled to the base portion, and wherein the saw portion is held adjacent to the base portion in a generally horizontal orientation with respect to the base portion when packaged.

22. The container assembly as claimed in claim 17, wherein the packaging material comprises foam.

23. The container assembly as claimed in claim 17, wherein the packaging material comprises cardboard.

24. The container assembly as claimed in claim 17, wherein the packaging material comprises formed pulp

25. A container assembly for holding a miter saw having a base portion and a saw portion pivotally joined to the base portion, comprising:
a container;
means for holding the miter saw within the container when the miter saw is disassembled so that the saw portion is separated from the base portion;
wherein the container has a minimum volume less than the volume required to hold the miter saw were the saw packaged in an assembled configuration such that the saw portion is assembled to the base portion.
